# NOUVEAU FASCICULE DE BREVET EUROPEEN

(11) **EP 1 851 517 B2**
(45) Date de publication et mention de la décision concernant l'opposition: **16.11.2016**
(45) Mention de la délivrance du brevet: 16.05.2012
(21) Numéro de dépôt: 06700685.8
(22) Date de dépôt: 09.01.2006
(51) Int. Cl.: G01F 19/00, G01G 9/00

(54) **PROCEDE DE COMMANDE D'UNE MACHINE DE SOUFFLAGE DE RECIPIENTS VISANT A CORRIGER DES ANOMALIES DANS LA REPARTITION DE MATIERE**
VERFAHREN ZUR STEUERUNG EINER CONTAINER-BLASFORMUNGSMASCHINE ZUR KORREKTUR VON ANOMALIEN DER MATERIALVERTEILUNG
METHOD FOR CONTROLLING A CONTAINER BLOW MOLDING MACHINE TO CORRECT ANOMALIES IN MATERIAL DISTRIBUTION

(30) Priorité: 17.02.2005 FR 0550449
(43) Date de publication de la demande: 07.11.2007
(73) Titulaire: Sidel Participations, 76930 Octeville Sur Mer (FR)
(72) Inventeur: DERRIEN, Mikaël, Sidel Participations, 76930 Octeville Sur Mer (FR); MARTIN, Dominique, Sidel Participations, 76930 Octeville Sur Mer (FR); BUNEL, Christophe, Sidel Participations, 76930 Octeville Sur Mer (FR)
(74) Mandataire: Gevers & Orès
(86) Numéro de dépôt international: PCT/EP2006/050094
(87) Numéro de publication internationale: WO 2006/087251

(56) Documents cités:
- EP-A- 0 870 592
- EP-A- 1 175 990
- EP-A1- 0 280 742
- EP-A1- 0 643 297
- EP-A2- 0 679 883
- EP-A2- 1 348 932
- DE-A1- 10 116 665
- US-A- 4 694 158
- US-A- 5 591 462
- US-A- 5 926 268
- US-A1- 2003 154 004
- US-A1-2003/0 159 856
- US-B1- 6 258 301
- US-B2- 7 098 440
- PATENT ABSTRACTS OF JAPAN vol. 015, no. 097 (M-1090), 8 mars 1991 (1991-03-08) -& JP 02 310021 A (HIROSHI UENO), 25 décembre 1990 (1990-12-25)

## Description

L'invention concerne un procédé de commande d'une machine de soufflage.

L'invention concerne plus particulièrement un procédé de commande d'une machine de soufflage pour la fabrication de récipients, tels que des bouteilles, à partir de préformes en matière plastique, du type dans lequel la machine comporte un système de commande, un four de conditionnement thermique et une unité de soufflage comprenant plusieurs postes de soufflage, chaque poste comportant un moule, et du type dans lequel un flux de préformes arrivent à l'entrée de l'unité de soufflage, en provenance d'un four de conditionnement thermique, chaque préforme étant introduite dans un moule où elle subit une opération de transformation en récipient comprenant au moins une étape de soufflage jusqu'à prendre la forme du moule, de manière à obtenir un flux de récipients à la sortie de la machine.

La fabrication de récipients, tels que des bouteilles, en matière plastique par soufflage de préformes est bien connue.

Avant d'être soufflée pour être conformée en récipient, la préforme subit un traitement thermique approprié dans un four de conditionnement thermique. Ce traitement thermique peut être plus ou moins sophistiqué en fonction des caractéristiques du récipient à obtenir.

La préforme est ensuite reçue dans un moule contenant l'empreinte du récipient à obtenir, et au cours de l'étape de soufflage, un fluide de soufflage, généralement de l'air sous haute pression (typiquement entre 25 x 10⁵ Pa et 40 x 10⁵ Pa), est injecté à l'aide d'une tuyère dans la préforme pour la gonfler et plaquer la matière le long des parois du moule, ce qui permet d'obtenir le récipient.

De préférence, l'opération de transformation peut inclure une étape d'étirage (encore appelée étape d'élongation) de la préforme à l'aide d'une tige d'élongation qui est associée au moule et est commandée en coulissement vers le fond de la préforme et/ou une étape de présoufflage (typiquement à une pression entre 25 x 10⁵ Pa et 40 x 10⁵ Pa).

Le fonctionnement d'une machine de soufflage est relativement complexe notamment en raison du nombre important de paramètres susceptibles d'influencer la qualité des récipients obtenus.

Généralement, la mise au point de la machine est effectuée manuellement par un technicien qui procède à des essais, en agissant sur les différents paramètres de fonctionnement de la machine, jusqu'à obtenir une qualité de récipient correcte en sortie de machine. C'est en particulier au cours de la mise au point qu'il est déterminé si l'opération de transformation devra comporter une étape d'étirage et/ou une étape de présoufflage, de même que le séquencement des instants de départ des diverses étapes mises en oeuvre.

Si la qualité des récipients est correcte lors de la mise au point initiale de la machine, les réglages effectués par le technicien peuvent toutefois être remis en cause au cours du fonctionnement de la machine en production.

Cette remise en cause peut intervenir lorsque des paramètres externes ou internes à la machine évoluent, par exemple lorsque les conditions ambiantes de température ou de pression changent, ou en raison de l'usure de certains éléments de la machine, ou bien encore lorsque des paramètres caractéristiques des préformes (tels que viscosité intrinsèque, qualité de la résine, humidité reprise par la matière, température initiale) changent en cours de production pour diverses raisons.

Ces phénomènes, lorsqu'ils sont détectés avec retard, peuvent entraîner des dérives de qualité, voire conduire à la perte de récipients.

De plus, il est nécessaire de recourir à une nouvelle phase de mise au point qui peut nécessiter des arrêts machine.

Le document DE-A-10.116.665 résout partiellement ces problèmes en proposant un procédé de commande d'une machine de soufflage dans lequel des paramètres de fonctionnement de la machine, tels que le profil de chauffage et/ou les paramètres de moulage, sont ajustés en fonction de l'épaisseur mesurée des parois des récipients.

Toutefois, on constate encore des dérives dans la qualité des récipients produits selon ce procédé. En effet, des récipients comportant des défauts importants, au niveau de la répartition de matière dans les parois, peuvent passer à travers les systèmes de contrôle du procédé.

Le document EP-A1-1.175.990 décrit une méthode de contrôle des récipients qui est basée sur le contrôle de la position de marques annulaires initialement présentes sur la préforme.

Les marques se retrouvent ensuite, après l'opération de soufflage, sur le corps du récipient sous la forme d'indicateurs destinés à être détectés par un système de capteurs et comparés à des spécifications de référence pour un tel récipient.

Ainsi, il est procédé à une évaluation de la répartition de matière grâce auxdits indicateurs dont la position permet l'analyse de la répartition des masses sur des récipients échantillons, un récipient étant correct lorsque chacun des indicateurs se retrouve dans une position déterminée avec une tolérance donnée.

Toutefois, l'évaluation se fait, d'une part, sur l'ensemble du récipient ce qui nécessite de multiples capteurs et rend la mise en oeuvre d'une telle méthode particulièrement coûteuse et de surcroît difficile à l'être en ligne pour garantir la fiabilité du contrôle.

Le document EP-A2-1.348.932 décrit un procédé de contrôle de l'épaisseur de la paroi d'un récipient en plastique obtenu par soufflage dans un moule.

La présente invention vise à remédier à ces inconvénients en proposant un procédé de fabrication de récipients plus stable, permettant d'améliorer la qualité générale des récipients fabriqués.

Dans ce but, l'invention propose un procédé de commande d'une machine de soufflage pour la fabrication de récipients à partir de préformes en matière plastique selon la revendication 1.

En fait, la Demanderesse a constaté qu'il est plus important que certaines portions ou tronçons déterminés, donc significatifs, des récipients aient une masse donnée plutôt qu'une épaisseur donnée.

En effet, les procédés connus, qui consistent à déterminer l'épaisseur ne sont pas parfaitement fiables en ce sens que la détermination d'épaisseur consiste à calculer une épaisseur moyenne de paroi à partir d'une mesure effectuée au travers d'un diamètre du récipient : or, il se peut très bien que la valeur moyenne calculée sur un diamètre soit correcte alors qu'il existe en fait une hétérogénéité d'épaisseur d'une extrémité du diamètre à l'autre, voire sur la périphérie, alors que lorsque la masse d'une portion significative du récipient est correcte, en général, le récipient lui-même est correct.

Selon d'autres caractéristiques de l'invention :
- la masse est estimée en ligne, directement dans le flux de récipients ;
- au cours de la phase d'estimation, la masse est estimée au moyen d'un dispositif de mesure agencé en aval de la machine ; le dispositif est un dispositif optique ; le dispositif est un dispositif ultrasonique ;
- par portion (ou tronçon) significative, il faut entendre une portion dont il est important qu'elle contienne une masse de matière donnée, et le dispositif de mesure estime la masse d'au moins une telle portion significative de chaque récipient ;

Il convient de noter que la notion de portion significative peut varier d'un récipient à l'autre : ainsi, pour une bouteille, une portion significative peut en être le fond ; une autre portion significative peut en être l'épaule ; une autre encore peut en être le corps (portion entre l'épaule et le fond). Egalement, pour certains récipients devant avoir une géométrie particulière en un emplacement donné, il peut être intéressant d'évaluer la masse de matière en cet emplacement qui constitue alors une portion significative.
- au cours de la phase d'analyse, la masse estimée est comparée aux estimations précédentes de manière à détecter des écarts de masse répétés indiquant l'existence d'une dérive, et la phase de correction est mise en oeuvre uniquement lorsqu'une dérive est détectée ;
- au cours de la phase d'analyse, si une dérive est détectée, le système de commande détermine si la dérive est locale, c'est-à-dire liée à un ou plusieurs postes déterminés, sans que la majorité des postes soit impactée, ou si la dérive est globale, c'est-à-dire liée à un dysfonctionnement général de la machine ou à une modification de paramètres extérieurs qui peuvent influer sur le résultat du soufflage (tels que la température ambiante, la pression atmosphérique), et la phase de correction est appliquée sur le ou les postes incriminés, lorsque la dérive est locale, et sur tous les postes, lorsque la dérive est globale ;
- en cas de dérive locale impactant plusieurs postes, le système de commande détermine si la dérive est identique sur l'ensemble des postes impactés et applique la même correction sur l'ensemble des postes concernés ou détermine si la dérive est différente d'un poste impacté à l'autre, et applique alors une correction appropriée différente ;
- au cours de la phase de correction, dans le cas d'une dérive locale, les paramètres modifiés sont choisis parmi le débit local du pré-soufflage, l'instant local de départ du pré-soufflage, la durée locale du pré-soufflage, la pression locale du pré-soufflage, l'instant local de départ de l'étirage et/ou la vitesse de l'étirage lorsque la machine comporte une tige d'élongation, l'instant local de départ du soufflage, l'instant de départ du balayage (opération consistant à réinjecter de l'air après le soufflage proprement dit, pour refroidir et figer le fond du récipient), l'instant local de départ du dégazage du récipient (remise à la pression ambiante), et dans le cas d'une dérive globale, les paramètres modifiés sont choisis parmi la pression globale du pré-soufflage, le débit du pré-soufflage, l'instant de départ du pré-soufflage, la durée du pré-soufflage, et l'instant global de départ de l'étirage et/ou la vitesse d'étirage lorsque la machine comporte une tige d'élongation, l'instant global de départ du soufflage et/ou la durée du soufflage, l'instant global de départ du balayage et/ou sa durée, l'instant de départ du dégazage ;
- au cours de la phase de correction, le système de commande vérifie que la dérive possède une amplitude suffisamment faible pour pouvoir être corrigée, et lorsque la dérive ne peut pas être corrigée, le système de commande signale l'existence d'un problème technique dans la machine ;
- lorsque le système de commande signale l'existence d'un problème technique dû à une dérive locale non corrigeable sur un poste, le système de commande propose une alternative entre :
   - faire fonctionner la machine en mode dégradé dans lequel le poste incriminé est neutralisé,
   - faire fonctionner la machine en mode dégradé dans lequel le poste incriminé est maintenu en fonctionnement,
   - arrêter la machine ;
- le procédé de contrôle met en oeuvre une vérification continue de la température de chaque préforme en entrée de machine, en aval du four, laquelle température est comparée à une température de consigne, et lorsqu'un écart significatif est détecté entre la température mesurée et la température de consigne, le système de commande signale l'existence d'un problème technique en amont de la machine ;
- dans une mise en oeuvre, la vérification de température de chaque préforme est ponctuelle ; dans une variante, la vérification est globale, de sorte que c'est la température moyenne de chaque préforme qui est déterminée.

D'autres caractéristiques et avantages de l'invention apparaîtront à la lecture de la description détaillée qui suit pour la compréhension de laquelle on se reportera aux dessins annexés dans lesquels :
- la figure 1 est un schéma qui représente une installation pour la fabrication de récipients, constitués par des bouteilles, par étirage et soufflage à partir de préformes ;
- la figure 2 est un organigramme qui illustre le cycle de contrôle du procédé de commande de la machine de soufflage équipant l'installation de la figure 1 conformément aux enseignements de l'invention.

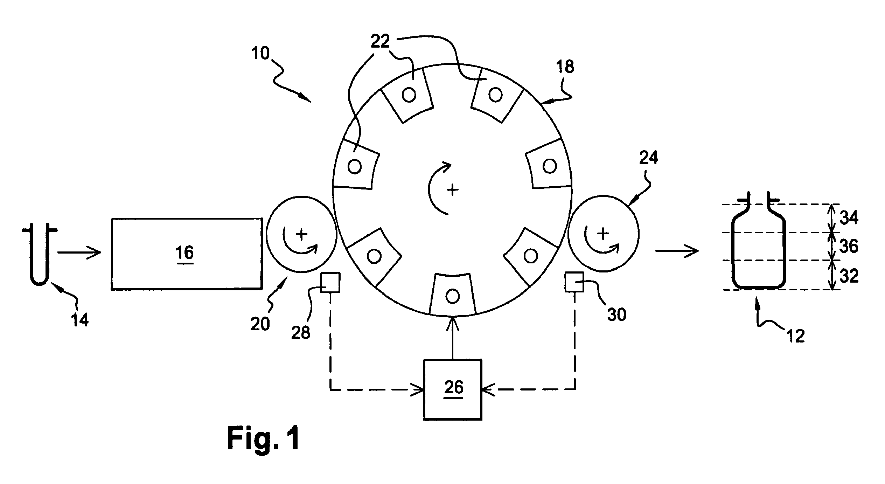

Sur la figure 1, on a représenté une installation 10 pour la fabrication de récipients 12, ici des bouteilles, à partir de préformes 14 en matière plastique.

Le matériau utilisé est, par exemple, du polyéthylène téréphtalate (PET).

L'installation 10 comporte un four 16 de conditionnement thermique qui est alimenté de manière continue par un flux de préformes 14 à l'aide de moyens de convoyage (non représentés), et qui amène les préformes 14 à une température appropriée.

A la sortie du four 16, les préformes 14 chauffées sont transférées vers une machine 18 de soufflage, par exemple au moyen d'une première roue 20 de transfert, de manière qu'un flux continu de préformes 14 alimente la machine 18.

La machine 18 est par exemple du type rotatif. Elle comporte un carrousel qui tourne de manière continue autour de son axe et qui porte, à sa périphérie, une série de postes 22 de soufflage.

Chaque poste 22 de soufflage comporte un moule et une tige d'élongation associée.

La machine 18 est pilotée au moyen d'un système 26 de commande.

Lorsqu'une préforme 14 arrive à l'entrée de la machine 18, elle est reçue dans un moule où elle subit une opération de pré-soufflage, une opération d'étirage, et une opération de soufflage jusqu'à prendre la forme complète du moule, de manière à obtenir un récipient 12.

On obtient, en sortie de machine 18, un flux de récipients 12.

Une seconde roue 24 de transfert se saisit des récipients 12, en sortie de machine 18, pour les transférer vers la sortie de l'installation 10.

L'installation 10 est équipée d'un capteur 28 de température qui est agencé à l'entrée de la machine 18 et d'un dispositif 30 de mesure, ici un dispositif optique, qui est agencé ici à la sortie de la machine 18.

Conformément au procédé de commande de la machine 18 selon l'invention, le système 26 de commande met en oeuvre, pour chaque récipient 12, un cycle de contrôle comportant les phases successives suivantes :
- une phase d'estimation Pₑ au cours de laquelle la masse M₀ d'au moins une portion significative du récipient 12 est estimée en aval de la machine 18,
- une phase d'analyse Pₐ au cours de laquelle la masse M₀ estimée est comparée à une masse de consigne M_{cons} de manière à détecter des écarts de masse ΔM représentatifs d'une anomalie dans la répartition de matière dans les parois du récipient,
- une phase de correction P_{c} au cours de laquelle des paramètres déterminants de l'opération de pré-soufflage et/ou des paramètres déterminants de l'opération d'étirage et/ou des paramètres déterminants de l'opération de soufflage proprement dite sont modifiés en fonction des écarts de masse ΔM de manière à corriger ces écarts de masse ΔM.

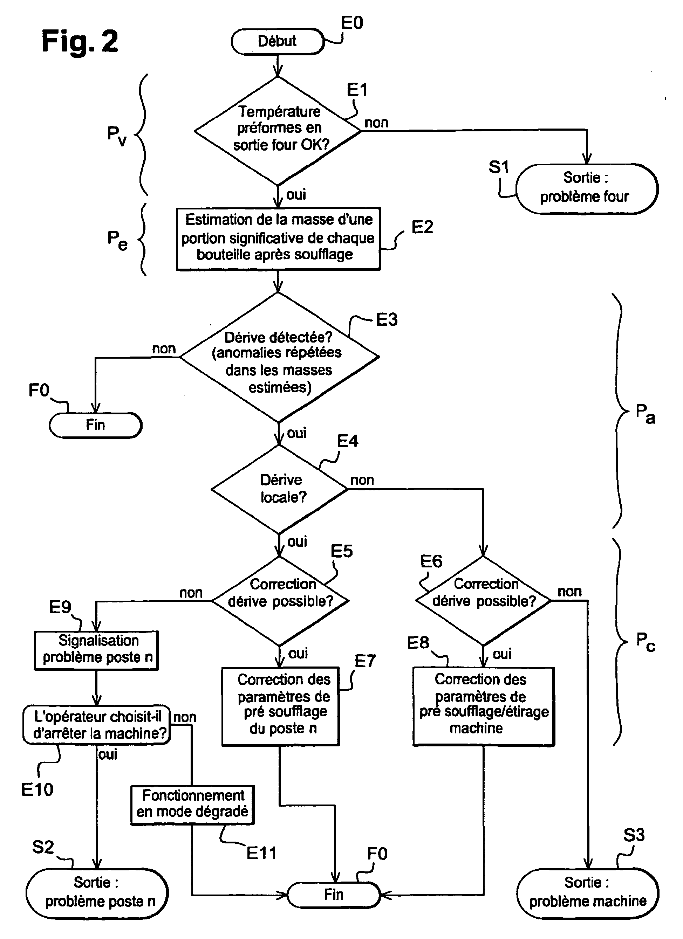

On décrit maintenant en détail un mode de réalisation préféré du procédé de commande selon l'invention, notamment en considérant l'organigramme représenté sur la figure 2, qui illustre le cycle de contrôle mis en oeuvre par le système 26 de commande.

Le cycle de contrôle commence à l'étape initiale E0 et se poursuit par la première étape E1 qui symbolise une phase de vérification Pᵥ au cours de laquelle la température T₀ de chaque préforme 14 est mesurée en entrée de machine 18, en aval du four 16, et est comparée à une température de consigne T_{cons}.

Lorsqu'un écart ΔT significatif de température est détecté entre la température mesurée T₀ et la température de consigne T_{cons}, le système 26 de commande signale l'existence d'un problème technique dans le fonctionnement du four 16, ce qui est symbolisé par la première étape de sortie S1.

Le cycle de contrôle est alors arrêté et le système 26 de commande peut commander l'arrêt de toute l'installation 10 dans le cas où il est impossible de corriger rapidement cet écart de température ΔT.

Si la température mesurée T₀ est conforme, le cycle de contrôle se poursuit par la phase d'estimation Pₑ.

On note que la phase de vérification Pᵥ peut intervenir à un autre moment dans le cycle de contrôle.

La phase d'estimation Pₑ est représentée par la deuxième étape E2 au cours de laquelle la masse M₀ d'au moins une portion significative du récipient 12 est mesurée au moyen du dispositif 30 de mesure.

Le dispositif 30 de mesure est par exemple un dispositif optique qui utilise des capteurs (non représentés) qui mesurent la transmission de radiations électromagnétiques à travers une zone déterminée des parois des récipients 12 pour en déduire le volume de matière correspondant ainsi que la masse M₀ de ce volume.

Un tel dispositif 30 est décrit, par exemple, dans le document US-A-2003/0159856.

Alternativement, un dispositif de mesure par ultrasons pourrait être utilisé.

Avantageusement, le dispositif 30 effectue les mesures de masse M₀ en ligne, c'est-à-dire directement dans le flux de récipients 12, de sorte qu'il n'est pas nécessaire de prélever des récipients 12 dans le flux.

En particulier, ce dispositif 30 permet, si nécessaire, d'effectuer les mesures de masse M₀ en continu sur tous les récipients 12 produits.

Il est cependant envisageable, quoique moins performant, de réaliser une estimation hors ligne, soit de façon automatique par exemple avec un dispositif optique, identique à celui 30 mentionné ci-avant, soit de façon manuelle, puis de réinjecter les données de mesure dans la machine afin que la correction puisse s'effectuer ensuite de manière automatique.

De préférence, la portion significative du récipient 12 choisie pour la mesure est constituée par au moins un tronçon axial du récipient 12.

Avantageusement, le tronçon 32 d'extrémité inférieure, qui correspond au fond du récipient 12, constitue ladite portion significative du récipient 12 qui, lorsque le récipient est une bouteille, comporte encore un tronçon 34 supérieur correspondant à son épaule et un tronçon intermédiaire 36 correspondant au corps du récipient.

Certes il est encore possible de choisir, comme portion significative, une partie de l'un et/ou de l'autre des tronçons 32, 34, 36, susmentionnés, telle que par exemple une partie ayant une forme particulière (ceinture de préhension, cannelure, etc.) et devant posséder une masse de matière prédéterminée, faute de quoi le récipient doit être considéré comme mauvais.

On note toutefois que, lorsque le récipient 12 est une bouteille, son tronçon 32 d'extrémité inférieure est particulièrement approprié à la mesure car c'est une zone qui est particulièrement sensible aux problèmes de répartition de matière.

La masse M₀ du tronçon 32, 34, 36 du récipient 12 constitue donc une valeur représentative de la qualité de la répartition de matière dans l'ensemble du récipient 12.

En effet, on a constaté que, lorsque la masse M₀ d'un tronçon 32, 34, 36 significatif correspond sensiblement à une valeur de consigne M_{cons} fixée par l'opérateur de la machine 18, la probabilité que la répartition de matière dans les parois du récipient 12 soit bonne est très élevée.

Par conséquent, l'existence d'un écart de masse ΔM significatif entre la masse mesurée M₀ et la masse de consigne M_{cons}, révèle l'existence d'une anomalie dans la répartition de matière dans les parois du récipient 12.

La phase d'estimation Pₑ est suivie de la phase d'analyse Pₐ, qui commence par la troisième étape E3, sur la figure 2, au cours de laquelle la masse M₀ estimée est comparée aux estimations précédentes, c'est-à-dire aux masses M₀ mesurées sur les récipients 12 produits avant celui en cours de contrôle.

La phase d'analyse Pₐ permet ainsi de détecter des écarts de masse ΔM répétés indiquant l'existence d'une dérive D dans le processus de production des récipients 12.

En effet, des écarts de masse ΔM ponctuels peuvent survenir, sans que cela soit lié à un dysfonctionnement de la machine 18. De tels écarts de masse ΔM ne doivent pas conduire à la mise en place de la phase de correction P_{c}.

La phase de correction P_{c} est donc mise en oeuvre uniquement lorsqu'une dérive D est détectée.

Lorsque aucune dérive D n'est détectée, le cycle de contrôle est terminé ce qui conduit à l'étape finale F0 sur la figure 2.

Lorsqu'une dérive D est détectée, la phase d'analyse Pₐ se poursuit par une quatrième étape E4 au cours de laquelle le système 26 de commande détermine si la dérive D est locale D_{L} car liée au dysfonctionnement d'un poste 22 déterminé ou encore au dysfonctionnement de plusieurs postes sans que la majorité des postes soit impactée, par exemple une dérive locale identique ou différente sur plusieurs postes, ou si la dérive D est globale D_{G} car liée à un dysfonctionnement général de la machine 18.

Le système 26 de commande comporte par exemple des moyens de comptage lui permettant de savoir, pour chaque récipient 12, sur quel poste 22 il a été fabriqué.

Après la phase d'analyse Pₐ, le système 26 de commande met en oeuvre la phase de correction P_{c}.

La phase de correction P_{c} débute ici par une étape préalable E5, E6 au cours de laquelle le système 26 de commande vérifie que l'amplitude de la dérive D est suffisamment faible pour pouvoir être corrigée.

Cette étape préalable est illustrée, sur la figure 2, par la cinquième étape E5, dans le cas d'une dérive locale D_{L}, et par la sixième étape E6, dans le cas d'une dérive globale D_{G}.

Dans le cas d'une dérive locale D_{L}, si la correction est possible, la phase de correction P_{c} se poursuit par la septième étape E7 au cours de laquelle des paramètres déterminants de l'opération de pré-soufflage sont modifiés sur le poste 22 incriminé ("poste n" sur la figure 2), en fonction des écarts de masse ΔM mesurés pendant la phase d'analyse Pₐ.

En outre, en cas de dérive locale impactant plusieurs postes, sans que toutefois la majorité des postes soit impactée, le système de commande détermine si la dérive locale est identique sur l'ensemble des postes impactés et applique, lors de la phase de correction, la même correction sur l'ensemble des postes concernés ou détermine si la dérive est différente d'un poste impacté à l'autre, et applique alors une correction appropriée différente.

De préférence, dans le cas d'une dérive locale D_{L}, le système 26 de commande modifie en priorité le débit local de pré-soufflage, c'est-à-dire celui du ou des postes 22 où une dérive locale a été détectée.

Bien entendu, le système 26 de commande peut modifier d'autres paramètres, en parallèle ou en remplacement du débit de pré-soufflage. Le système 26 de commande peut, par exemple, décaler l'instant local de démarrage de l'opération de pré-soufflage ou modifier la durée de l'opération de pré-soufflage, la pression locale du pré-soufflage, l'instant local de départ et/ou la vitesse de l'étirage, l'instant de départ du soufflage et/ou sa durée, l'instant de départ du balayage (opération consistant à réinjecter de l'air après le soufflage proprement dit, pour refroidir et figer le fond du récipient), l'instant local de départ du dégazage du récipient (remise à la pression ambiante).

Dans le cas d'une dérive globale D_{G}, si la correction est possible, la phase de correction P_{c} se poursuit par la huitième étape E8 au cours de laquelle des paramètres déterminants de l'opération de pré-soufflage et/ou de l'opération d'étirage sont modifiés, sur l'ensemble de la machine 18, en fonction des écarts de masse ΔM mesurés pendant la phase d'analyse Pₐ. Les modifications effectuées se répercutent ici sur tous les postes 22 de la machine.

De préférence, dans le cas d'une dérive globale D_{G}, le système 26 de commande modifie en priorité la valeur de la pression de pré-soufflage.

Bien entendu, le système 26 de commande peut modifier d'autres paramètres, en parallèle ou en remplacement de la pression de pré-soufflage. Le système 26 de commande peut, par exemple, modifier le débit de pré-soufflage, décaler l'instant de démarrage de l'opération de pré-soufflage, modifier la durée de l'opération de pré-soufflage. Le système 26 de commande peut aussi modifier la vitesse d'étirage, c'est-à-dire la vitesse à laquelle la tige d'élongation coulisse vers le fond de la bouteille 12, jusqu'à sa position extrême, l'instant de départ du soufflage et/ou sa durée, l'instant de départ du balayage, l'instant de départ du dégazage, ou tout autre paramètre du processus de formage proprement dit.

On note que, lorsque les écarts de masse Δm sont positifs, c'est-à-dire que la masse du fond de la bouteille 12 est trop importante, le système 26 de commande peut corriger cette anomalie de répartition de matière en augmentant le débit de pré-soufflage et/ou en avançant l'instant de démarrage du pré-soufflage et/ou en diminuant la durée du pré-soufflage et/ou en augmentant la pression de pré-soufflage et/ou en diminuant la vitesse d'étirage, et/ou en agissant de façon appropriée sur l'un et/ou l'autre des paramètres susmentionnés (balayage, dégazage, etc.).

De manière symétrique, lorsque les écarts de masse ΔM sont négatifs, c'est-à-dire que la masse du fond de la bouteille 12 est insuffisante, le système 26 de commande corrige cette anomalie de répartition de matière en modifiant les paramètres de pré-soufflage et/ou d'étirage en sens inverse, par rapport au sens indiqué précédemment.

Après avoir effectué les modifications de paramètres, le cycle de contrôle se poursuit jusqu'à l'étape finale F0.

Comme le cycle de contrôle est mis en oeuvre de manière itérative, une nouvelle étape initiale E0 succède à l'étape finale F0.

La mise en oeuvre itérative du cycle de contrôle permet, dans les cas de la détection d'une dérive D, de vérifier que les modifications effectuées ont permis de corriger la dérive D. Dans le cas contraire, une nouvelle phase de correction P_{c} sera appliquée.

Lorsque le système 26 de commande considère que la correction n'est pas possible, il signale l'existence d'un problème technique dans la machine 18.

Dans le cas d'une dérive locale D_{L} ne pouvant être corrigée, le système 26 de commande signale un problème technique sur le poste 22 incriminé, ce qui correspond, sur la figure 2, à la neuvième étape E9.

Avantageusement, le système 26 de commande peut proposer, dans ce cas, deux alternatives à l'opérateur chargé de l'exploitation de la machine 18, comme l'illustre la dixième étape E10 de l'organigramme.

L'opérateur peut choisir entre :
- arrêter la machine 18, ce qui entraîne l'arrêt du cycle de contrôle, comme illustré par la deuxième étape de sortie S2,
- faire fonctionner la machine 18 en mode dégradé, comme illustré par la onzième étape E11.

En mode dégradé, le poste 22 incriminé peut être neutralisé, de sorte que la machine 18 peut continuer de fonctionner ; alternativement, il peut être décidé de faire fonctionner la machine en mode dégradé en maintenant le poste incriminé en fonctionnement.

Par exemple, il peut être prévu un dispositif de neutralisation (non représenté) en amont de la machine 18 qui éjecte les préformes 14 destinées au poste 22 incriminé.

En mode dégradé, le cycle de contrôle se poursuit jusqu'à l'étape finale F0.

Dans le cas d'une dérive globale D_{G} ne pouvant être corrigée, le système 26 de commande signale un problème technique concernant l'ensemble de la machine, ce qui correspond, sur la figure 2, à la troisième étape de sortie S3.

Le système 26 commande alors l'arrêt de la machine 18.

Bien entendu, les informations techniques sur le fonctionnement de la machine 18, qui ont été obtenues au cours du cycle de contrôle, peuvent être utilisées par le système 26 de commande à des fins de diagnostic, notamment pour aider à la résolution des éventuels problèmes techniques détectés dans la machine 18.

## Revendications

1. Procédé de commande d'une machine (18) de soufflage pour la fabrication de récipients (12) à partir de préformes (14) en matière plastique, du type dans lequel la machine (18) comporte un système (26) de commande et plusieurs postes (22) de soufflage, chaque poste (22) comportant un moule, et du type dans lequel un flux de préformes (14) arrive à l'entrée de la machine (18), en provenance d'un four (16) de conditionnement thermique, chaque préforme (14) étant reçue dans un moule où elle subit une opération de transformation en récipient comprenant au moins une étape de soufflage jusqu'à prendre la forme du moule, de manière à obtenir un flux de récipients (12) à la sortie de la machine (18),
où le système (26) de commande met en oeuvre, de manière itérative, un cycle de contrôle comportant les phases successives suivantes :
- une phase d'estimation (Pₑ) au cours de laquelle la masse (M₀) d'au moins une portion significative de chaque récipient (12) est estimée en aval de la machine (18),
- une phase d'analyse (Pₐ) au cours de laquelle la masse (M₀) estimée est comparée à une masse de consigne (M_{cons}) de manière à détecter des écarts de masse (ΔM) représentatifs d'une anomalie ou d'une dérive dans la répartition de matière dans les parois de la bouteille (12),
- une phase de correction (P_{c}) au cours de laquelle au moins l'un des paramètres déterminants de l'opération de transformation est modifié en fonction des écarts de masse (ΔM) de manière à corriger lesdits écarts de masse (ΔM),
**caractérisé en ce que,** au cours de la phase d'analyse (Pₐ), la masse (M₀) estimée est comparée aux estimations précédentes de manière à détecter des écarts de masse (ΔM) répétés indiquant l'existence d'une dérive (D),
si une dérive (D) est détectée, le système (26) de commande détermine si la dérive (D) est locale (D_{L}) car liée au dysfonctionnement d'au moins un poste (22) déterminé, ou si la dérive (D) est globale (D_{G}) car liée à un dysfonctionnement général de la machine (18),
et **en ce que** la phase de correction (P_{c}) est mise en oeuvre uniquement lorsqu'une dérive (D) est détectée,
la phase de correction (P_{c}) étant appliquée sur un seul poste (22), lorsque la dérive (D) est locale (D_{L}), et sur tous les postes (22), lorsque la dérive (D) est globale (D_{G})
et **en ce que** lorsque le système (26) de commande détermine que plusieurs postes sont affectés par une dérive locale (D_{L}), il évalue si la dérive locale est identique sur l'ensemble des postes impactés et applique la même correction sur l'ensemble des postes concernés, ou si la dérive est différente d'un poste impacté à l'autre et applique alors une correction appropriée différente.

2. Procédé selon la revendication 1, **caractérisé en ce que** la masse (M₀) est estimée en ligne, directement dans le flux de bouteilles (12).

3. Procédé selon la revendication 1, **caractérisé en ce que** la masse (M₀) est estimée hors ligne.

4. Procédé selon la revendication 3, **caractérisé en ce que** la masse (M₀) est estimée de façon manuelle.

5. Procédé selon l'une des revendications 1 à 3, **caractérisé en ce que**, au cours de la phase d'estimation (Pₑ), la masse (M₀) est estimée au moyen d'un dispositif (30) de mesure agencé en aval de la machine (18).

6. Procédé selon la revendication 5, **caractérisé en ce que** le dispositif (30) de mesure est un dispositif optique.

7. Procédé selon la revendication 1, **caractérisé en ce que**, au cours de la phase de correction (P_{c}), dans le cas d'une dérive locale (D_{L}), les paramètres modifiés sont choisis parmi le débit local du pré-soufflage, l'instant local de démarrage du pré-soufflage, et la durée locale du pré-soufflage, et la pression locale du pré-soufflage, et l'instant local de départ de l'étirage et/ou la vitesse de l'étirage lorsque la machine comporte une tige d'élongation, l'instant de départ du soufflage et/ou sa durée, l'instant de départ du balayage, et l'instant local de départ du dégazage du récipient, et dans le cas d'une dérive globale (D_{G}), les paramètres modifiés sont choisis parmi la pression globale du pré-soufflage, le débit global du pré-soufflage, l'instant global de démarrage du pré-soufflage, la durée globale du pré-soufflage, et la vitesse globale d'étirage, et l'instant global de départ du soufflage et/ou sa durée, et l'instant global de départ du balayage, l'instant global de départ du dégazage.

8. Procédé selon la revendication 7, **caractérisé en ce que**, au cours de la phase de correction (P_{c}), le système (26) de commande vérifie que la dérive (D) possède une amplitude suffisamment faible pour pouvoir être corrigée, et **en ce que**, lorsque la dérive (D) ne peut pas être corrigée, le système (26) de commande signale l'existence d'un problème technique dans la machine (18).

9. Procédé selon la revendication 8, **caractérisé en ce que**, lorsque le système signale l'existence d'un problème technique dû à une dérive locale (D_{L}) non corrigeable sur un poste (22), le système (26) de commande propose une alternative entre :
- faire fonctionner la machine (18) en mode dégradé dans lequel le poste (22) incriminé est neutralisé,
- faire fonctionner la machine (18) en mode dégradé dans lequel le poste (22) incriminé est maintenu en fonctionnement ;
- arrêter la machine (18).

10. Procédé selon l'une quelconque des revendications 1 à 9, **caractérisé en ce que** le cycle de contrôle comporte une phase de vérification (Pᵥ) au cours de laquelle la température (T₀) de chaque préforme (14) est mesurée en entrée de machine (18), en aval du four (16), et est comparée à une température de consigne (T_{cons}), et **en ce que**, lorsqu'un écart (ΔT) significatif est détecté entre la température (T₀) mesurée et la température de consigne (T_{cons}), le système (26) de commande signale l'existence d'un problème technique en amont de la machine (18).

## Patentansprüche

1. Verfahren zur Steuerung einer Blasformungsmaschine (18) für die Herstellung von Behältern (12) aus Vorformen (14), die aus Kunststoff gefertigt sind, wobei die Maschine (18) ein Steuerungssystem (26) und mehrere Blasstationen (22) aufweist, und jede Station (22) eine Form besitzt, derart, dass ein Strom von Vorformen (14) vom thermischen Aufbereitungsofen (16) kommend am Eintritt der Maschine (18) ankommt, wobei jede Vorform (14) in einer Form aufgenommen ist, in der sie in einen Behälter umgewandelt wird, was mindestens einen Schritt des Blasformens aufweist, bis die Gestalt der Form angenommen ist, so dass man am Ausgang der Maschine (18) einen Strom von Behältern (12) erhält,
wobei das Steuerungssystem (26) iterativ einen Steuerkreislauf ausführt, der die nachfolgend genannten, aufeinander folgenden Phasen besitzt:
- eine Phase der Einschätzung (Pₑ), im Verlaufe derer die Masse (M₀) mindestens eines bedeutenden Teils eines jeden Behälters (12) nach der Maschine (18) geschätzt wird,
- eine Phase der Analyse (Pₐ), im Verlaufe derer die geschätzte Masse (M₀) mit einer Soll-Masse (M_{cons}) verglichen wird, um repräsentative Masseabweichungen (ΔM) einer Anomalie oder einer Abweichung in der Verteilung des Materials in den Wänden der Flasche (12) zu erkennen,
- eine Phase der Korrektur (P_{c}), im Verlaufe derer mindestens einer der entscheidenden Parameter für den Arbeitsgang der Umwandlung in Abhängigkeit von Masseabweichungen (ΔM) verändert wird, um die genannten Masseabweichungen (ΔM) zu korrigieren, **dadurch gekennzeichnet, dass**, die geschätzte Masse (M₀) im Laufe der Phase der Analyse (Pₐ) mit den vorhergehenden Schätzungen verglichen wird, um wiederholte Masseabweichungen (ΔM) festzustellen, die das Vorhandensein einer Abweichung (D) anzeigen,
wenn eine Abweichung (D) festgestellt wird, das Steuerungssystem (26) feststellt, ob es sich bei der Abweichung (D) um eine lokale Abweichung (D_{L}) handelt, weil sie mit der Fehlfunktion mindestens einer bestimmten Station (22) verbunden ist, oder ob es sich bei der Abweichung (D) um eine globale Abweichung (D_{G}) handelt, weil sie mit einer allgemeinen Fehlfunktion der Maschine (18) verbunden ist, und dass die Phase der Korrektur (P_{c}) ausschließlich dann durchgeführt wird, wenn eine Abweichung (D) festgestellt wird, wobei die Phase der Korrektur (P_{c}) auf eine einzige Station (22) angewendet wird, wenn die Abweichung (D) lokal (D_{L}) ist, und auf alle Stationen (22), wenn die Abweichung (D) global (D_{G}) ist,
und dass, wenn das Steuerungssystem (26) feststellt, dass mehrere Stationen von einer lokalen Abweichung (D_{L}) betroffen sind, beurteilt wird, ob die lokale Abweichung bei allen betroffenen Stationen identisch ist, und dieselbe Korrektur auf sämtliche betroffenen Stationen angewendet wird, oder, wenn die Abweichung bei den betroffenen Stationen unterschiedlich ist, eine entsprechende unterschiedliche Korrektur angewendet wird.

2. Verfahren nach Anspruch 1, **dadurch gekennzeichnet, dass** die Masse (M₀) online direkt im Strom der Flaschen (12) beurteilt wird.

3. Verfahren nach Anspruch 1, **dadurch gekennzeichnet, dass** die Masse (M₀) offline beurteilt wird.

4. Verfahren nach Anspruch 3, **dadurch gekennzeichnet, dass** die Masse (M₀) manuell beurteilt wird.

5. Verfahren nach einem der Ansprüche 1 bis 3, **dadurch gekennzeichnet, dass** die Masse (M₀) im Verlaufe der Phase der Einschätzung (Pₑ) mit Hilfe einer Messvorrichtung (30) beurteilt wird, die hinter der Maschine (18) angeordnet ist.

6. Verfahren nach Anspruch 5, **dadurch gekennzeichnet, dass** es sich bei der Messvorrichtung (30) um eine optische Vorrichtung handelt.

7. Verfahren nach Anspruch 1, **dadurch gekennzeichnet, dass** im Verlaufe der Phase der Korrektur (P_{c}) im Falle einer lokalen Abweichung (D_{L}) die geänderten Parameter unter den folgenden Parametern ausgewählt werden: der lokalen Durchsatzmenge des Vorblasens, dem lokalen Zeitpunkt des Beginns des Vorblasens, und der lokalen Dauer des Vorblasens, und dem lokalen Druck des Vorblasens, und dem lokalen Zeitpunkt des Beginns des Streckens und/oder der Geschwindigkeit des Streckens, wenn die Maschine einen Dehnungsstab besitzt, dem Zeitpunkt des Beginns des Blasformens und/oder seiner Dauer, dem Zeitpunkt des Beginns der Abtastung, und dem lokalen Zeitpunkt des Beginns der Entgasung des Behälters, und im Falle einer globale Abweichung (D_{G}) werden die geänderten Parameter unter den folgenden Parametern ausgewählt: dem Gesamtdruck des Vorblasens, der Gesamtdurchsatzmenge des Vorblasens, dem globalen Zeitpunkt des Startens des Vorblasens, der globalen Dauer des Vorblasens, und der globalen Geschwindigkeit des Streckens, und dem globalen Zeitpunkt des Beginns des Blasformens und/oder seiner Dauer, und dem globalen Zeitpunkt des Beginns der Abtastung, und dem globalen Zeitpunkt des Beginns der Entgasung.

8. Verfahren nach Anspruch 7, **dadurch gekennzeichnet, dass** das Steuerungssystem (26) im Verlaufe der Phase der Korrektur (P_{c}) prüft, ob die Abweichung (D) eine ausreichend geringe Amplitude besitzt, um korrigiert zu werden, und dass, wenn die Abweichung (D) nicht korrigiert werden kann, das Steuerungssystem (26) das Vorhandensein eines technischen Problems in der Maschine (18) anzeigt.

9. Verfahren nach Anspruch 8, **dadurch gekennzeichnet, dass**, wenn das System das Vorhandensein eines technischen Problems aufgrund einer lokalen, nicht korrigierbaren Abweichung (D_{L}) an einer Station (22) anzeigt, das Steuerungssystem (26) eine der nachfolgend genannten Alternativen vorschlägt:
- Inbetriebnahme der Maschine (18) in einem herabgesetzten Modus, bei dem die beanstandete Station (22) neutralisiert ist,
- Inbetriebnahme der Maschine (18) in einem herabgesetzten Modus, bei dem die beanstandete Station (22) in Betrieb gehalten wird;
- Abschalten der Maschine (18).

10. Verfahren nach einem der Ansprüche 1 bis 9, **dadurch gekennzeichnet, dass** der Steuerkreislauf eine Phase der Überprüfung (Pᵥ) besitzt, im Verlaufe derer die Temperatur (T₀) jeder Vorform (14) am Eintritt der Maschine (18) hinter dem Ofen (16) gemessen wird, und mit einer Solltemperatur (T_{cons}) verglichen wird, und dass das Steuerungssystem (26) das Vorhandensein eines technischen Problems vor der Maschine (18) anzeigt, wenn eine deutliche Abweichung (ΔT) zwischen der gemessenen Temperatur (T₀) und der Solltemperatur (T_{cons}) festgestellt wird.

## Claims

1. Method of controlling a blow molding machine (18) for manufacturing containers (12) from plastic preforms (14), of the type in which the machine (18) comprises a control system (26) and several blow molding stations (22), each station (22) comprising a mold, and of the type in which the flow of preforms (14) arrives at the inlet of the machine (18), coming from a thermal conditioning oven (16), each preform (14) being received in a mold in which it undergoes a container conversion operation, which includes at least one blowing step until the preform takes the form of the mold, so as to obtain a flow of containers (12) at the outlet of the machine (18),
where the control system (26) implements, in an iterative manner, a control cycle comprising the following successive phases:
- an estimation phase (Pₑ) during which the mass (M₀) of at least one significant portion of each container (12) is estimated downstream of the machine (18);
- an analysis phase (Pₐ) during which the estimated mass (M₀) is compared with a setpoint mass (M_{cons}) so as to detect mass deviations (ΔM) representative of an anomaly or of a drift in the material distribution in the walls of the bottle (12); and
- a correction phase (P_{c}) during which at least one of the key parameters of the conversion operation is modified according to the mass deviations (ΔM) so as to correct said mass deviations (ΔM),
**characterized in that**, during the analysis phase (Pₐ), the estimated mass (M₀) is compared with the previous estimates so as to detect repeated mass deviations (ΔM) indicating the existence of a drift (D),
if a drift (D) is detected, the control system (26) determines whether the drift (D) is a local drift (D_{L}), as being due to the malfunction of a specified station (22), or whether the drift (D) is an overall drift (D_{G}), as being due to a general malfunction of the machine (18),
and **in that** the correction phase (P_{c}) is implemented only when a drift (D) is detected,
the correction phase (P_{c}) being applied to a single station (22) when the drift (D) is a local drift (D_{L}) and to all the stations (22) when the drift (D) is an overall drift (D_{G})
and **in that** when the control system (26) determines that several stations are affected by a local drift (D_{L}), it determines whether the local drift is identical on all the stations affected, and applies the same correction to all the stations in question, or whether the drift is different from one affected station to another, and then applies a different appropriate correction.

2. Method according to Claim 1, **characterized in that** the mass (M₀) is estimated in line, directly in the flow of bottles (12).

3. Method according to Claim 1, **characterized in that** the mass (M₀) is estimated off line.

4. Method according to Claim 3, **characterized in that** the mass (M₀) is estimated manually.

5. Method according to one of Claims 1 to 3, **characterized in that**, during the estimation phase (Pₑ), the mass (M₀) is estimated by means of a measurement device (30) placed downstream of the machine (18).

6. Method according to Claim 5, **characterized in that** the measurement device (30) is an optical device.

7. Method according to Claim 1, **characterized in that**, during the correction phase (P_{c}), in the case of a local drift (D_{L}), the modified parameters are chosen from the local rate of the preblowing, the local instant of the preblowing, the local duration of the preblowing, the local pressure of the preblowing, the local instant of the start of stretching and/or the stretching rate when the machine includes a stretching rod, the instant of the start of blowing and/or its duration, the instant of the start of flushing, and the local instant of the start of degassing the container, and in the case of an overall drift (D_{G}), the modified parameters are chosen from the overall pressure of the preblowing, the overall rate of the preblowing, the overall instant of the start of preblowing, the overall duration of the preblowing, the overall stretching rate, the overall instant of the start of blowing and/or its duration, the overall instant of the start of flushing, and the overall instant of the start of degassing.

8. Method according to Claim 7, **characterized in that**, during the correction phase (P_{c}), the control system (26) checks that the drift (D) possesses a low enough amplitude to be able to be corrected and **in that**, when the drift (D) cannot be corrected, the control system (26) signals the existence of a technical problem in the machine (18).

9. Method according to Claim 8, **characterized in that**, when the system signals the existence of a technical problem due to an uncorrectable local drift (D_{L}) on a station (22), the control system (26) proposes an alternative between:
- operating the machine (18) in degraded mode, in which the incriminated station (22) is neutralized;
- operating the machine (18) in degraded mode in which the incriminated station (22) is kept in operation; and
- stopping the machine (18).

10. Method according to any one of Claims 1 to 9, **characterized in that** the control cycle includes a verification phase (Pᵥ) during which the temperature (T₀) of each preform (14) is measured at the inlet of the machine (18), downstream of the oven (16), and is compared with a setpoint temperature (T_{cons}) and **in that**, when a significant deviation (ΔT) is detected between the measured temperature (T₀) and the setpoint temperature (T_{cons}), the control system (26) signals the existence of a technical problem upstream of the machine (18).
